(19) Europäisches Patentamt

European Patent Office

Office européen des brevets

(11) Veröffentlichungsnummer: **0 415 274 A2**

# (12) EUROPÄISCHE PATENTANMELDUNG

(21) Anmeldenummer: 90116201.6

(22) Anmeldetag: 24.08.90

(51) Int. Cl.⁵: **B23K 11/24**

(30) Priorität: 31.08.89 DE 3928881

(43) Veröffentlichungstag der Anmeldung:
**06.03.91 Patentblatt 91/10**

(84) Benannte Vertragsstaaten:
**AT BE CH DK ES FR GB GR IT LI LU NL SE**

(71) Anmelder: **DALEX-WERKE NIEPENBERG GMBH & CO. KG**
,
W-5248 Wissen/Sieg(DE)

(72) Erfinder: **Wagner, Georg**
**Buchenweg 5**
**W-6093 Flörsheim/Main 1(DE)**

(74) Vertreter: **Schüler, Horst, Dr.**
**Kaiserstrasse 69**
**W-6000 Frankfurt/Main 1(DE)**

(54) Diodenanordnung in Widerstandsschweissmaschinen.

㊗ Die Erfindung betrifft die Diodenanordnung im Sekundärkreis von Widerstandsschweißmaschinen, die zwischen Wechselstromschiene und Sekundär-plus-Schiene mittels Spannschrauben mechanisch verspannt sind, wobei zwischen jeder Diode (1) und der Sekundär-plus-Schiene (6) eine Schnellwechselkontaktplatte (5) angeordnet und auf der Schiene (6) durch Verschrauben befestigt ist.

EP 0 415 274 A2

## DIODENANORDNUNG IN WIDERSTANDSSCHWEISSMASCHINEN.

Die Erfindung betrifft die Anordnung der Hochstromdioden im Sekundärkreis von Widerstandsschweißmaschinen.

Bereits seit längerer Zeit werden Widerstandsschweißmaschinen fast ausschließlich mit Gleichstrom betrieben. Die dafür erforderlichen hohen Gleichströme werden mittels Hochstromdioden erzeugt, die im Sekundärkreis der Widerstandsschweißmaschine angeordnet sind.

Um die Stromwege möglichst kurz zu halten werden üblicher weise die Hochstromdioden direkt zwischen der Wechselstromschiene und der Sekundär-plus-Schiene mittels Spannschrauben verspannt, damit ein ausreichender Kontaktdruck und damit ein ausreichender Kantakt gewährleistet ist.

In der Regel werden mehrere Hochstromdioden in einem Zweig einer Widerstandsschweißmaschine zur Stromgleichrichtung eingesetzt um die notwendigen Stromstärken zu erhalten. Diese Hochstromdioden werden dabei in einem Block zusammengefaßt und gemeinsam verspannt.
Ein solcher Block wird dann direkt auf der Sekundär-plus-Schiene angeordnet.

Beim Betrieb der Widerstandsschweißmaschinen tritt des öfteren eine Überlastung einer Hochstromdiode auf. Das hat zur Folge, daß die entsprechende Diode ausfällt bzw. durchlegiert und ersetzt werden muß. Fast immer ist jedoch mit einem solchen Ausfall einer Diode gleichzeitig auch eine Beschädigung der Sekundär-plus-Schiene verbunden, auf der die Diode verspannt ist. Die Schiene verbrennt teilweise oder verschmilzt mit der Diode, was zur Folge hat, daß nicht nur die Diode sondern auch die Sekundär-plus-Schiene ganz ausgewechselt werden muß. Insbesondere bei Schweißmaschinen mit einer Vielzahl von Dioden die auf der Sekundär-plus-Schiene angeordnet sind, führt dies zu außerordentlich umfangreichen Reparaturarbeiten, die einen längeren Ausfall der Widerstandsschweißmaschine zur Folge haben und daneben erweist sich natürlich auch der vollständige Ersatz der Sekundär-plus-Schiene rein materialmäßig ebenfalls als sehr kostspielig.

Ausgehend von diesem Stand der Technik liegt der vorliegenden Erfindung nunmehr die Aufgabe zugrunde, eine neue Diodenanordnung im Sekundärkreis von Widerstandsschweißmaschinen zu schaffen, bei der der Ersatz einer ausgefallenen Diode einfach zu bewerkstalligen ist und weiterhin auch eine Beschädigung der Sekundär-plus-Schiene durch die ausgefallene Diode vermieden wird.

Gelöst wird diese Aufgabe erfindungsgemäß mit einer Diodenanordnung im Sekundärkreis von Widerstandsschweißmaschinen, die zwischen Wechselstromschiene und Sekundär-plus-Schiene jeweils mittels Spannschrauben mechanisch verspannt sind, dadurch, daß zwischen jeder Diode und der Sekundär-plus-Schiene eine Schnellwechsel-Kontaktplatte angeordnet und auf der Schiene durch Verschrauben befestigt ist.

Durch das Verschrauben dieser Schnellwechsel-Kontaktplatte wird der notwendige Anpressdruck erreicht, der notwendig ist um einen ausreichenden Kontakt zwischen Schnellwechsel-Kontaktplatte und Sekundär-plus-Schiene zu gewährleisten.

Durch den Ausfall einer Diode wird bei dieser erfindungsgemäßen Ausfühungsform nur die Schnellwechsel-Kontaktplatte und gegebenenfalls die leicht zu demontierende Wechselstromschiene beschädigt. Die Sekundär-plus-Schiene wird nicht mehr in Mitleidenschaft gezogen, weil sie im Bereich der Diode von der ausreichend dick bemessenen Schnellwechsel-Kontaktplatte geschützt ist.

Durch Lösen der Spannschrauben und Austauschen der beschädigten Bauteile, also der Schnellwechsel-Kontaktplatte und der Hochstromdiode läßt sich der Schaden schnell und ohne großen Materialaufwand beheben.

Gemäß einer besonders vorteilhaften Ausführungsform der erfindungsgemäßen Diodenanordnung ist die Schnellwechsel-Kontaktplatte auf der Sekundär-plus-Schiene mittels Stehbolzen verschraubt, die andererseits über ihr freies Schraubende die Diode zwischen Wechselstromschiene und Schnellwechselkontktplatte verspannen.
Eine solche Ausführungsform zweichnet sich durch äußerst geringen Raumbedarf aus, sodaß eine besonders dichte Packung der Hochstromdioden auf der Sekundär-plus-Schiene erreicht werden kann.

Durch das Einschrauben der Stehbolzen wird dabei einerseits die Schnellwechsel-Kontaktplatte fest mit der Sekundär-plus-Schiene verbunden sodaß der notwendige Kontakt zwischen diesen beiden Bauteilen gewährleistet ist, und andererseits gestatten diese Stehbolzen weiterhin auch das feste Verspannen der Diode zwischen Wechselstromschiene und Schnellwechsel-Kontaktplatte.

Gemäß einer besonders bevorzugten Ausführungsform der vorliegenden Erfindung verspannen die freien Schraubenden der Stehbolzen über eine Federaufnahme mit einer oder mehreren Tellerfedern die Diode mit konstantem Kontaktdruck zwischen Wechselstromschiene einerseits und Schnellwechselkontaktplatte andererseits. Auf diese Weise wird für alle auf der Sekundär-plus-Schiene verschraubten Hochstromdioden weitgehend ein konstanter Anpreßdruck und damit ein in etwa gleicher Kontakt mit der Wechselstromschiene einerseits und der Sekundär-plus-Schiene andererseits erreicht.

Das Verspannen sowohl der Schnellwechselkontaktplatte als auch der Hochstromdiode erfordert zumindest drei Spannschrauben bzw. Stehbolzen, vorteilhafterweise sollten indessen zumindest vier dieser Spannmittel Anwendung finden.

Die auf der Sekundär-plus-Schiene verschraubte Schnellwechselkontaktplatte ist zweckmäßig aus dem gleichen Material gefertigt wie die Sekundärplus-Schiene selbst, die ihrerseits aus einem gut leitfähigen Material, wie beispielsweise Kupfer besteht.

Die Anordnung von mehreren Hochstromdioden auf der Sekundär-plus-Schiene erfolgt zweckmäßig in Reihe hintereinander. Selbstverständlich können auch mehrere solcher Diodenreihen nebeneinander auf dieser Schiene angeordnet werden.

An Hand der anliegenden Zeichnung, die die erfindungsgemäße Anordnung einer Hochstromdiode zwischen Wechselstromschiene und Sekundärplus-Schiene einer Widerstandsschweißmaschine in teilweise geschnittener Form zeigt, wird nachfolgend die Erfindung im einzelnen näher erläutert.

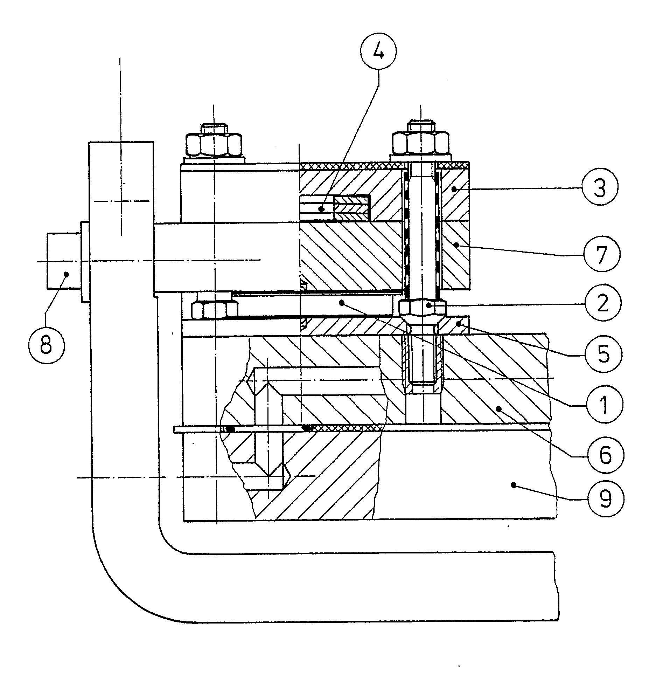

In der Zeichnung zeigt:
das Bezugszeichen 1 die Hochstromdiode, die zwischen der Wechselstromschiene 7 und der auf der Sekundär-plus-Schiene 6 angeordneten Schnellwechselkontaktplatte 5 verspannt ist.
Die Schnellwechselkontaktplatte 5 ist mit den Stehbolzen 2 zur Erzielung eines innigen Kontaktes mit der Sekundär-plus-Schiene 6 verschraubt.
Im Schnitt ist dabei nur ein Stehbolzen dargestellt, indessen ist im vorliegenden Falle die Hochstromdiode mittels vier Stehbolzen mit der Sekundärplus-Schiene verschraubt. Über die freien Schraubenden der Stehbolzen 2 ist gleichzeitig die Wechselstromschiene 7 gegen die Hochstromdiode 1 verspannt, wobei eine Federaufnahme 3 mit darin angebrachten Tellerfedern 4 für einen gleichmäßigen Kontaktdruck zwischen Wechselstromschiene 7, Hochstromdiode 1 und Schnellwechselkontaktplatte 5 sorgt, ohne daß hierfür spezielle Meßeinrichtungen oder sonstiges Hilfswerkzeug erforderlich ist.

Zur Vermeidung eines Kurzschlusses ist, wie aus der Zeichnung ersichtlich das jeweilige Schraubende der Stehbolzen 2 gegenüber der Wechselstromschiene 7 isoliert.

Die Wechselstromschiene 7 ist andererseits über die Verschraubung 8 leicht zu lösen, sodaß bei Ausfall einer Diode durch Lösen der vorzugsweise vier Stehbolzen und der Verschraubung 8 alle beschädigten Teile schnell ausgewechselt werden können.

Der geringe Abstand zwischen der Sekundärplus-Schiene 6 und der daneben isoliert angeordneten Minusschiene 9 sorgt dabei für einen sehr guten Wirkungsgrad der Widerstandsschweißmaschine.

## Ansprüche

1. Diodenanordnung im Sekundärkreis von Widerstandsschweißmaschinen, die zwischen Wechselstromschiene und Sekundär-plus-schiene jeweils mittels Spannschrauben mechanisch verspannt sind,
**dadurch gekennzeichnet,**
daß zwischen jeder Diode (1) und der Sekundärplus-Schiene (6) eine Schnellwechselkontaktplatte (5) angeordnet und auf der Schiene (6) durch Verschrauben befestigt ist.

2. Diodenanordnung nach Anspruch 1,
**dadurch gekennzeichnet,**
daß die Schnellwechselkontaktplatte (5) auf der Sekundär-plus-Schiene (6) mittels Stehbolzen (2) verschraubt ist, die über ihr freies Schraubende die Diode (1) zwischen Wechselstromschiene (7) und Schnellwechselkontaktplatte (5) verspannen.

3. Diodenanordnung nach Anspruch 1,
**dadurch gekennzeichnet,**
daß die freien Schraubenden der Stehbolzen (2) über eine Federaufnahme (3) mit einer oder mehreren Tellerfedern (4) die Diode (1) mit konstantem Kontaktdruck gegen Wechselstromschiene (7) und Schnellwechselkontaktplatte (5) verspannen.

4. Diodenanordnung nach einem der Ansprüche 2 oder 3,
**dadurch gekennzeichnet,**
daß die Schnellwechselkontaktplatte (5) mit mindestens drei Stehbolzen (2) auf der Sekundär-plus-Schiene (6) verschraubt ist.

5. Diodenanordnung nach Anspruch 4,
**dadurch gekennzeichnet,**
daß die Schnellwechselkontaktplatte (5) mit vier Stehbolzen (2) auf der Sekundär-plus-Schiene (6) verschraubt ist.

6. Diodenanordnung nach einem oder mehreren der Ansprüche 1 bis 5,
**dadurch gekennzeichnet,**
daß die Schnellwechselkontaktplatte (5) aus dem gleichen Material wie die Sekundär-plus-Schiene (6) besteht.

7. Widerstandsschweißmaschine
**dadurch gekennzeichnet,**
daß sie auf der Sekundär-plus-Schiene (6) in Reihe hintereinander mehrere Diodenanordnungen gemäß den Ansprüchen 1 bis 6 aufweist.

8. Widerstandsschweißmaschine nach Anspruch 7,
**dadurch gekennzeichnet,**
daß sie auf der Sekundär-plus-Schiene (6) nebeneinander zwei oder mehr Reihen der Diodenanordnungen gemäß den Ansprüchen 1 bis 5 aufweist.